# EUROPEAN PATENT SPECIFICATION

(11) **EP 2 609 128 B1**
(45) Date of publication and mention of the grant of the patent: **30.03.2016**
(21) Application number: 10856286.9
(22) Date of filing: 25.08.2010
(51) Int. Cl.: C08L 63/00, C08L 25/08, C08F 212/08, C08F 222/08, C08F 232/08

(54) **Curable Composition**
Vernetzbare Zusammensetzung
Composition durcissable

(43) Date of publication of application: 03.07.2013
(73) Proprietor: Blue Cube IP LLC, Midland MI 48674 (US)
(72) Inventor: MULLINS, Michael J., Houston, Texas 77004 (US); LIAO, Annie, Beijing 100190 (CN); ZHANG, Chao, Shanghai 200237 (CN); XIONG, Jiawen, Shanghai 200126 (CN); CHEN, Hongyu, Shanghai (CN)
(74) Representative: Bumke, Jakob Wenzel
(86) International application number: PCT/CN2010/076337
(87) International publication number: WO 2012/024833

(56) References cited:
- CN-A- 1 955 219
- CN-A- 101 058 618
- DE-A1- 2 658 857
- JP-A- 6 346 070
- JP-A- 62 015 206
- US-A- 4 126 739
- US-B2- 6 509 414

## Description

### Field of Disclosure

This disclosure relates to curable compositions comprising polymers, and in particular copolymers.

### Background

Epoxy systems may consist of two components that can chemically react with each other to form a cured epoxy, which is a hard, inert material. The first component can be an epoxy compound and the second component can be a curing agent, sometimes called a hardener. Epoxy compounds contain epoxide groups. The hardener includes compounds which are reactive to the epoxide groups of the epoxy compounds.

Epoxy systems can be used to make composite materials. Composite materials are materials that are made from two or more components that have distinct mechanical properties. The components of the composite materials can be a matrix component and a reinforcement component.

Copolymers derived from styrene and maleic anhydride (SMA) have been used as hardeners for epoxy systems, including use in electronic applications, e.g. printed circuit boards, where the copolymer is employed as a matrix component. These hardeners can provide a combination of acceptable properties that may include a low dielectric constant and a high glass transition temperature. See, for example, US 6509414, which relates to a resin composition comprising a copolymer of styrene and maleic anhydride (SMA) as cross-linking agent, an epoxy resin, and a co-cross-linking agent, characterized in that the co-cross-linking agent is an optionally brominated bisphenol A (BPA), or an optionally brominated bishpenol A diglycidyl ether (BPADGE), or a mixture thereof, and that the composition is free from an allyl network forming compound. The resin may be applied to make laminates and printed wiring boards.

The ratio of styrene to maleic anhydride can be adjusted to alter the properties of a composite material. In general, as the ratio of styrene to maleic anhydride is increased the dielectric constant is reduced, which is desirable, but the glass transition temperature is concurrently reduced, which is undesirable.

A process to prepare printed circuit boards can involve first making a prepreg, e.g. a partially cured, coated glass mat, by coating glass with a solution of an epoxy compound and hardener. For this process, low viscosity is highly desirable. It is known that chain transfer agents can be added during production of the SMA copolymers to reduce the molecular weight (and therefore solution viscosities) to acceptable levels. However, obtaining low molecular weight SMA copolymers becomes more difficult as the ratio of styrene to maleic anhydride is increased.

The preparation of low molecular weight SMA copolymers can be achieved by adding high levels of radical trapping agents, such as 2,2,6,6-tetramethylpiperidine or 2-mercaptopropionic acid, during polymerization. However, these trapping agents can be expensive and difficult to remove from the polymer, and therefore it is desirable to minimize their use.

Low molecular weight anhydride copolymers are desirable to not only achieve low solution viscosity, but also to maintain a usefully long gel time. The gel time is a measure of the time for a thermosetting system to form a network with essentially infinite molecular weight and dramatically increased viscosity. If the gel time is too short, for some applications, it can become difficult to apply sufficient heat for a long enough time to drive off all of the solvent from the prepreg. Because of the increase in viscosity as heat is applied, solvent that remains after the gel point is reached diffuses through the prepreg very slowly. In the worst case the trapped solvent can boil, leaving 'craters' in the prepreg that are very undesirable.

The gel time for an anhydride copolymer is primarily determined by the average number of anhydrides per polymer chain, which is in turn determined by the molecular weight and the ratio of anhydride to other co-monomers.

It is known that copolymers of dicyclopentadiene (DCPD) and maleic anhydride (MA) can be prepared with sufficiently low molecular weights. This is possible because DCPD chain terminates much faster than styrene. An advantage of these copolymers is that, in comparison with styrene, DCPD is relatively rigid and it can help provide adequate glass transition temperatures. However, DCPD and MA form an alternating copolymer, or worse, a polycyclic structure with a 1:2 molar ratio of DCPD to MA (Vasilescu et al, Polymer International, vol 54, 215-220, 2005).

A further limitation of the alternating DCPD/MA copolymer is that the amount of non-polar component (DCPD) is lower than desired. This can help establish an undesirable limit on the dielectric constant reduction that can be achieved.

Therefore, there continues to be a need for improved hardeners.

### Summary

The present disclosure provides one or more embodiments of a curable composition that includes an epoxy compound, the copolymer discussed herein, and a solvent.

Said copolymer is obtainable by reacting styrenic compound, maleic anhydride, and a cyclo-olefin, where the cyclo-olefin is selected from the group consisting of dicyclopentadiene, dicyclopentadiene derivatives, norbornene, norbornene derivatives, and combinations thereof.

For one or more of the embodiments, the present disclosure provides a product obtained by curing the curable composition discussed herein.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Embodiments of the present disclosure provide a copolymer for inclusion in the curable composition. The copolymers as discussed herein are useful, among other things, as curing agents, e.g. hardeners, of curable compositions that include epoxy compounds. The copolymers have a weight average molecular weight and a polydispersity index that can help provide that curable compositions have gel point, as discussed herein, suitable for some processing applications. The gel points of the curable compositions help provide for solvent removal from the curable compositions. Solvent entrapment can contribute to the undesirability of products formed from a curable composition.

Additionally, the curable compositions as discussed herein can be cured to obtain products that have a desirable combination of thermal and dielectric properties. The desirable thermal properties can include glass transition temperature and degradation temperature, and the desirable dielectric properties can include relative permittivity and dissipation factor. Such products can be useful for powder coatings, electrical encapsulates, composites, adhesives, prepregs and/or electrical laminates.

As used herein, "a," "an," "the," "at least one," and "one or more" are used interchangeably. The term "and/or" means one, one or more, or all of the listed items. The recitations of numerical ranges by endpoints include all numbers subsumed within that range (e.g., 1 to 5 includes 1, 1.5, 2, 2.75, 3, 3.80, 4, 5, etc.).

A copolymer is a polymer that is obtainable by combining more than one species of monomer via chemical reaction. Monomers of the present disclosure include styrenic compound, maleic anhydride, and a cyclo-olefin selected from the group consisting of dicyclopentadiene, dicyclopentadiene derivatives, norbornene, norbornene derivatives, and combinations thereof. A derivative is a compound derived or obtained from another compound that may be referred to as a parent compound. The derivative contains elements of the parent compound. A compound is a substance composed of atoms or ions of two or more elements in chemical combination.

Styrenic compound, as used herein, includes the compound styrene having the chemical formula C₆H₅CH=CH₂ and compounds derived therefrom, e.g. styrene derivatives, unless explicitly stated otherwise. Styrenic compound may be represented by the following Formula I, where each R group is independently a hydrogen, C₁-C₂₀ alkyl or alkoxy, chloro, fluoro, bromo. The R groups may also be bound into ring structures such as naphthalene and tetrahydronaphthalene.

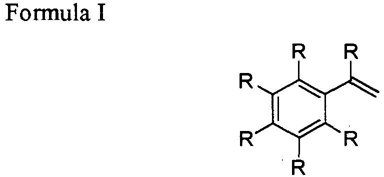

Maleic anhydride, which may also be referred to as *cis*-butenedioic anhydride, toxilic anhydride, or dihydro-2,5-dioxofuran, has a chemical formula: C₂H₂(CO)₂O. Maleic anhydride may be represented by the following Formula II:

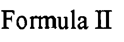

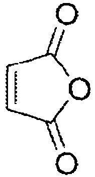

Examples of the cyclo-olefin include, but are not limited to, compounds represented by the following Formula III and Formula IV, wherein: R¹, R² and R³ are each independently a halogen atom, an alkyl group having one to ten carbon atoms, a cycloalkyl group having five to seven carbon atoms, or an aromatic group; n represents an integer of 0 through 4; and m represents an integer of ≥ 0.

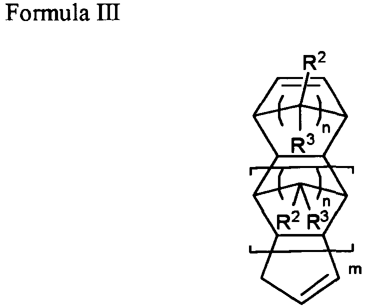

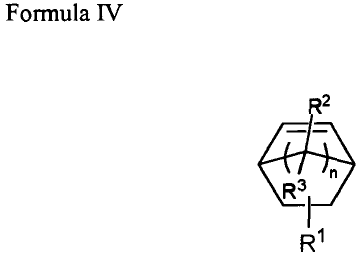

Some specific examples of the cyclo-olefin include dicyclopentadiene, dicyclopentadiene derivatives, norbornene, norbornene derivatives, and combinations thereof.

The copolymers as discussed herein can be obtained by free radical polymerization. The free radical polymerization can include mixing a first, or a first and a second, of the monomers with a radical initiator in a first portion of a solvent to form a first reactant mixture. An example of the radical initiator includes, but is not limited to, azobisisobutyronitrile. The radical initiator can have a concentration based a total monomer weight of from 0.01 weight percent to 10 weight percent, preferably from 0.1 weight percent to 3 weight percent. Examples of the solvent include, but are not limited to, cyclohexanone, 2-butanone, methanol, acetone, methyl ethyl ketone, and combinations thereof.

The first reactant mixture can be placed into an inert environment at a reaction pressure of 50 kilopascal (kPa) to 200 kPa and be heated to a reaction temperature of 60 degrees Celsius (°C) to 120 °C. The inert environment can include an inert gas. An example of the inert gas includes, but is not limited to, nitrogen.

A second reactant mixture can be formed by mixing a second, or a second and a third, of the monomers with a second portion of the solvent. The second reactant mixture can include a chain transfer agent. An example of the chain transfer agent includes, but is not limited to, dodecyl mercaptan. For one or more of the embodiments, a monomer, or monomer(s), that is included in the first reactant mixture can also be included in the second reactant mixture. To obtain the copolymers by reacting the monomers, the first reactant mixture and the second reactant mixture can be combined to form a product mixture that contains the copolymers. For example, the second reactant mixture can be added to the first reactant mixture via dropwise addition to obtain a product mixture that contains the copolymers. The mixtures can be stirred before, during, and/or after the dropwise addition.

In obtaining the copolymers, it can be advantageous to employ a first reactant mixture that includes the cyclo-olefin and a second reactant mixture that includes styrenic compound and maleic anhydride. Additionally, for these applications, it can be advantageous to include the chain transfer agent in the second reaction mixture.

The copolymers can be isolated from the product mixture by precipitation via dropwise addition of the product mixture into methanol. The copolymers that have been isolated can be further processed. Examples of the further processing include, but are not limited to, filtering, drying, and grinding.

Molecular weight and/or a polydispersity index of the copolymers can be affected by which components are included in the first reactant mixture and the second reactant mixture and/or concentrations of those components therein.

For one or more embodiments, the copolymer can have a weight average molecular weight from 800 to 20,000; for example the copolymer can have a weight average molecular weight from 1,000 to 18,000, or from 1,500 or 16,000.

For one or more embodiments, the copolymer can have a polydispersity index of 1.05 to 5.00; for example the copolymers can have a polydispersity index from 1.07 to 3.50, or 1.10 to 2.50.

Furthermore, properties, e.g. thermal properties and/or dielectric properties, of the products obtained by curing the disclosed curable compositions can be affected by the mole fractions of the monomers that are reacted to obtain the copolymers. For one or more of the embodiments, the copolymer can be obtained by reacting a styrenic compound mole fraction of 0.01 to 0.90, a maleic anhydride mole fraction of 0.01 to 0.50, and a cyclo-olefin mole fraction of 0.10 to 0.50, such that the styrenic compound mole fraction, the maleic anhydride mole fraction, and the cyclo-olefin mole fraction equal 1.00.

For example, the styrenic compound mole fraction can be 0.20 to 0.85, or 0.50 to 0.80; the maleic anhydride mole fraction can be 0.05 to 0.35, or 0.08 to 0.25; and the cyclo-olefin mole fraction can be 0.05 to 0.35, or 0.08 to 0.25.

As discussed herein, the copolymers are obtainable by combining the monomers via chemical reaction. The reacted monomers form constitutional units of the copolymers. The copolymers include constitutional units that are derived from styrenic compound, maleic anhydride, and the cyclo-olefin.

Constitutional units derived from the styrenic compound are from 1 weight percent to 80 weight percent of the copolymer; for example the constitutional units derived from the styrenic compound can be from 2 weight percent to 75 weight percent, or 5 weight percent to 60 weight percent of the copolymer.

Constitutional units derived from the maleic anhydride are from 1 weight percent to 50 weight percent of the copolymer; for example the constitutional units derived from the maleic anhydride can be from 2 weight percent to 45 weight percent, or 5 weight percent to 30 weight percent of the copolymer.

Constitutional units derived from the cyclo-olefin are from 1 weight percent to 45 weight percent of the copolymer; for example the constitutional units derived from the cyclo-olefin can be from 2 weight percent to 40 weight percent, or 5 weight percent to 35 weight percent of the copolymer.

The present disclosure provides one or more embodiments of a curable composition. For one or more embodiments, the curable compositions can include an epoxy compound, the copolymer as discussed herein, and a solvent. As discussed herein, the copolymers can be employed as hardeners for curable compositions that include epoxy compounds.

For one or more embodiments, the curable compositions include an epoxy compound. An epoxy compound is a compound in which an oxygen atom is directly attached to two adjacent or non-adjacent carbon atoms of a carbon chain or ring system.

The epoxy compound can be selected from the group consisting of aromatic epoxy compounds, alicyclic epoxy compounds, aliphatic epoxy compounds, and combinations thereof.

For one or more embodiments, the curable compositions include an aromatic epoxy compound. Examples of aromatic epoxy compounds include, but are not limited to, glycidyl ether compounds of polyphenols, such as hydroquinone, resorcinol, bisphenol A, bisphenol F, 4,4'-dihydroxybiphenyl, phenol novolac, cresol novolac, trisphenol (tris-(4-hydroxyphenyl)methane), 1,1,2,2-tetra(4-hydroxyphenyl)ethane, tetrabromobisphenol A, 2,2-bis(4-hydroxyphenyl)-1,1,1,3,3,3-hexafluoropropane, 1,6-dihydroxynaphthalene, and combinations thereof.

For one or more embodiments, the curable compositions include an alicyclic epoxy compound. Examples of alicyclic epoxy compounds include, but are not limited to, polyglycidyl ethers of polyols having at least one alicyclic ring, or compounds including cyclohexene oxide or cyclopentene oxide obtained by epoxidizing compounds including a cyclohexene ring or cyclopentene ring with an oxidizer. Some particular examples include, but are not limited to, hydrogenated bisphenol A diglycidyl ether; 3,4-epoxycyclohexylmethyl-3,4-epoxycyclohexyl carboxylate; 3,4-epoxy-1-methylcyclohexyl-3,4-epoxy-1-methylhexane carboxylate; 6-methyl-3,4-epoxycyclohexylmethyl-6-methyl-3,4-epoxycyclohexane carboxylate; 3,4-epoxy-3-methylcyclohexylmethyl-3,4-epoxy-3-methylcyclohexane carboxylate; 3,4-epoxy-5-methylcyclohexylmethyl-3,4-epoxy-5-methylcyclohexane carboxylate; bis(3,4-epoxycyclohexylmethyl)adipate; methylene-bis(3,4-epoxycyclohexane); 2,2-bis(3,4-epoxycyclohexyl)propane; dicyclopentadiene diepoxide; ethylene-bis(3,4-epoxycyclohexane carboxylate); dioctyl epoxyhexahydrophthalate; di-2-ethylhexyl epoxyhexahydrophthalate; and combinations thereof.

For one or more embodiments, the curable compositions include an aliphatic epoxy compound. Examples of aliphatic epoxy compounds include, but are not limited to, polyglycidyl ethers of aliphatic polyols or alkylene-oxide adducts thereof, polyglycidyl esters of aliphatic long-chain polybasic acids, homopolymers synthesized by vinyl-polymerizing glycidyl acrylate or glycidyl methacrylate, and copolymers synthesized by vinyl-polymerizing glycidyl acrylate or glycidyl methacrylate and other vinyl monomers. Some particular examples include, but are not limited to glycidyl ethers of polyols, such as 1,4-butanediol diglycidyl ether; 1,6-hexanediol diglycidyl ether; a triglycidyl ether of glycerin; a triglycidyl ether of trimethylol propane; a tetraglycidyl ether of sorbitol; a hexaglycidyl ether of dipentaerythritol; a diglycidyl ether of polyethylene glycol; and a diglycidyl ether of polypropylene glycol; polyglycidyl ethers of polyether polyols obtained by adding one type, or two or more types, of alkylene oxide to aliphatic polyols such as propylene glycol, trimethylol propane, and glycerin; diglycidyl esters of aliphatic long-chain dibasic acids; and combinations thereof.

For one or more embodiments, the curable compositions include a solvent that is selected from the group consisting of C₃-C₈ ketones, C₁-C₆ amides, C₄-C₁₆ dialkyl ethers, C₆-C₁₂ aromatic hydrocarbons, C₁-C₃ chlorinated hydrocarbons, C₃-C₆ alkyl alkanoates, C₂-C₆ alkyl cyanides, and combinations thereof. The carbon number ranges refer to the total number of carbon atoms in a solvent molecule. For example, a C₄-C₁₆ dialkyl ether has 4 to 16 total carbon atoms.

Examples of C₃-C₈ ketones include, but are not limited to, acetone, methyl ethyl ketone, methyl isobutyl ketone, cyclohexanone, and combinations thereof.

Examples of C₁-C₆ amides include, but are not limited to, formamide, dimethylformamide, dimethylacetamide, N-methyl-2-pyrrolidinone, and combinations thereof.

Examples of C₄-C₁₆ dialkyl ethers include, but are not limited to, tetrahydrofuran, ethylene glycol monomethylether, propropylene glycol monomethyl ether, dioxane, and combinations thereof.

Examples of C₆-C₁₂ aromatic hydrocarbons include, but are not limited to, benzene, toluene, xylene, and combinations thereof.

Examples of C₁-C₃ chlorinated hydrocarbons include, but are not limited to, chloroform, methylene chloride, and combinations thereof.

Examples of C₃-C₆ alkyl alkanoates include, but are not limited to, methyl acetate, ethyl acetate, methyl propionate, ethyl propionate, propylene glyol methyl ether acetate, and combinations thereof.

Examples of C₂-C₆ alkyl cyanides include, but are not limited to, acetonitrile, propionitrile, butytonitrile, and combinations thereof.

For one or more embodiments, the curable compositions can include a co-curing agent. Similarly to the copolymers as discussed herein, the co-curing agents are reactive to the epoxide groups of the epoxy compounds. The co-curing agent can be selected from the group consisting of novolacs, amines, anhydrides, carboxylic acids, phenols, thiols, and combinations thereof.

For one or more of the embodiments, the co-curing agent can include a novolac. Examples of novolacs include phenol novolacs. Phenols can be reacted in excess, with formaldehyde in the presence of an acidic catalyst to produce phenol novolacs.

For one or more of the embodiments, the co-curing agent can include an amine. An amine is a compound that contains an N-H moiety. The amine can be selected from the group consisting of aliphatic polyamines, arylaliphatic polyamines, cycloaliphatic polyamines, aromatic polyamines, heterocyclic polyamines, polyalkoxy polyamines, dicyandiamide and derivatives thereof, aminoamides, amidines, ketimines, and combinations thereof.

Examples of aliphatic polyamines include, but are not limited to, ethylenediamine (EDA), diethylenetriamine (DETA), triethylenetetramine (TETA), trimethyl hexane diamine (TMDA), hexamethylenediamine (HMDA), N-(2-aminoethyl)-1,3-propanediamine (N₃-Amine), N,N'-1,2-ethanediylbis-1,3-propanediamine (N₄-amine), dipropylenetriamine, and reaction products of an excess of these amines with an epoxy resin, such as bisphenol A diglycidyl ether, and combinations thereof.

Examples of arylaliphatic polyamines include, but are not limited to, m-xylylenediamine (mXDA), and p-xylylenediamine. Examples of cycloaliphatic polyamines include, but are not limited to, 1,3-bisaminocyclohexylamine (1,3-BAC), isophorone diamine (IPDA), and 4,4'-methylenebiscyclohexaneamine. Examples of aromatic polyamines include, but are not limited to, m-phenylenediamine, diaminodiphenylmethane (DDM), and diaminodiphenylsulfone (DDS). Examples of heterocyclic polyamines include, but are not limited to, N-aminoethylpiperazine (NAEP), 3,9-bis(3-aminopropyl) 2,4,8,10-tetraoxaspiro(5,5)undecane, and combinations thereof.

Examples of polyalkoxy polyamines include, but are not limited to, 4,7-dioxadecane-1,10-diamine; 1-propanamine; (2,1-ethanediyloxy)-bis-(diaminopropylated diethylene glycol) (ANCAMINE® 1922A); poly(oxy(methyl-1,2-ethanediyl)), alpha-(2-aminomethylethyl)omega-(2-aminomethylethoxy) (JEFFAMITTE® D-230, D-400); triethyleneglycoldiamine ;and oligomers (JEFFAMINE® XTJ-504, JEFFAMINE® XTJ-512); poly(oxy(methyl-1,2-ethanediyl)), alpha,alpha'-(oxydi-2,1-etha nediyl)bis(omega-(aminomethylethoxy)) (JEFFAMINE® XTJ-511); bis(3-aminopropyl)polytetrahydrofuran 350; bis(3-aminopropyl)polytetrahydrofuran 750; poly(oxy(methyl-1,2-ethanediyl)); a-hydro-w-(2-aminomethylethoxy) ether with 2-ethyl-2-(hydroxymethyl)-1,3-propanediol (JEFFAMINE® T-403); diaminopropyl dipropylene glycol; and combinations thereof.

Examples of dicyandiamide and derivatives thereof include, but are not limited to, guanazole, phenyl guanazole, cyanoureas, and combinations thereof.

Examples of aminoamides include, but are not limited to, amides formed by reaction of the above aliphatic polyamines with a stoichiometric deficiency of anhydrides and carboxylic acids, as described in U.S. Patent 4,269,742.

Examples of amidines include, but are not limited to, carboxamidines, sulfinamidines, phosphinamidines, and combinations thereof.

Examples of ketimines include compounds having the chemical formula (R⁴)₂C = NR⁵, where each R⁴ is an alkyl group and R⁵ is an alkyl group or hydrogen, and combinations thereof.

For one or more of the embodiments, the co-curing agent can include an anhydride. An anhydride is a compound having two acyl groups bonded to the same oxygen atom. The anhydride can be symmetric or mixed. Symmetric anhydrides have identical acyl groups. Mixed anhydrides have different acyl groups. The anhydride is selected from the group consisting of aromatic anhydrides, alicyclic anhydrides, aliphatic anhydride and combinations thereof.

Examples of aromatic anhydrides include, but are not limited to, 3,3',4,4'-benzophenonetetracarboxylic dianhydride, pyromellitic anhydride, and combinations thereof

Examples of alicyclic anhydrides include, but are not limited to methyltetrahydrophthalic anhydride, tetrahydrophthalic anhydride, methyl nadic anhydride, hexahydrophthalic anhydride, methylhexahydrophthalic anhydride, and combinations thereof.

Examples of aliphatic anhydrides include, but are not limited to, propionic anhydride, acetic anhydride, and combinations thereof.

For one or more of the embodiments, the co-curing agent can include a carboxylic acid. Examples of carboxylic acids include oxoacids having the chemical formula R⁶C(=O )OH, where R⁶ is an alkyl group or hydrogen, and combinations thereof.

For one or more of the embodiments, the co-curing agent can include a phenol. Examples of phenols include, but are not limited to, bisphenols, novolacs, and resoles that can be derived from phenol and/or a phenol derivative, and combinations thereof.

For one or more of the embodiments, the co-curing agent can include a thiol. Examples of thiols include compounds having the chemical formula R⁷SH, where R⁷ is an alkyl group, and combinations thereof

For one or more embodiments, the curable compositions include a catalyst and/or a 'latent catalyst' or co-catalyst. Examples of the catalyst and/or a 'latent catalyst' or co-catalyst include, but are not limited to, 2-methyl imidazole, 2-phenyl imidazole, 2-ethyl-4-methyl imidazole, 1-benzyl-2-phenylimidazole, boric acid, triphenylphosphine, tetraphenylphosphonium-tetraphenylborate, and combinations thereof. The catalyst can be used in an amount of from 0.01 parts by weight to 10 parts by weight per 100 parts by weight of the epoxy compound, 0.05 parts by weight to 9 parts by weight per 100 parts by weight of the epoxy compound, or 0.1 parts by weight to 8 parts by weight per 100 parts by weight of the epoxy compound.

For one or more embodiments, the curable compositions include an additive. The additive can be selected from the group consisting of dyes, pigments, colorants, antioxidants, heat stabilizers, light stabilizers, plasticizers, lubricants, flow modifiers drip retardants, flame retardants, antiblocking agents, mold release agents, toughening agents, low-profile additives, stress-relief additives, and combination thereof. The additive can be employed in an effective amount for a particular application, as is understood by one having ordinary skill in the art. For different applications, the effective amount can have different values.

For one or more embodiments, the curable composition can include an inhibitor. The inhibitor can inhibit the activity of the catalyst during formation of a prepreg, e.g. B-staging, as discussed herein. The inhibitor can be a Lewis acid. Examples of the inhibitor include, but are not limited to, boric acid, halides, oxides, hydroxides and alkoxides of zinc, tin, titanium, cobalt, manganese, iron, silicon, boron, aluminum, and combinations thereof. Boric acid as used herein refers to boric acid or derivatives thereof, including metaboric acid, trimethyl borate and other borate esters, and boric anhydride. The curable compositions can contain from 0.3 moles of inhibitor per mole of catalyst to 3.0 moles of inhibitor per mole of catalyst; for example curable compositions can contain from 0.4 moles of inhibitor per mole of catalyst to 2.8 moles of inhibitor per mole of catalyst, or 0.5 moles of inhibitor per mole of catalyst to 2.6 moles of inhibitor per mole of catalyst.

For one or more embodiments of the curable composition, the epoxy compound can be 20 parts by weight to 80 parts by weight based on 100 parts by weight total of the epoxy compound, the copolymer, and the curing agent; for example the epoxy compound can be from 25 parts by weight to 75 parts by weight, or 30 parts by weight to 70 parts by weight based on 100 parts by weight total of the epoxy compound, the copolymer, and the curing agent.

For one or more embodiments of the curable composition, a combination of the copolymer and the co-curing agent can be 20 parts by weight to 80 parts by weight based on 100 parts by weight total of the epoxy compound, the copolymer, and the curing agent; for example the combination of the copolymer and the co-curing agent can be from 25 parts by weight to 75 parts by weight, or 30 parts by weight to 70 parts by weight based on 100 parts by weight total of the epoxy compound, the copolymer, and the curing agent.

For one or more embodiments of the curable composition, the solvent can be 2 parts by weight to 100 parts by weight based on 100 parts by weight total of the epoxy compound, the copolymer, and the curing agent; for example the solvent can be from 5 parts by weight to 95 parts by weight, or 10 parts by weight to 90 parts by weight based on 100 parts by weight total of the epoxy compound, the copolymer, and the curing agent.

For one or more embodiments, the curable composition can have a gel time of 200 seconds (s) to 400 s at 171 °C including all individual values and/or subranges therein; for example the curable compositions can have a gel time of 205 s to 395 s at 171 °C, or 210 s to 390 s at 171 °C.

Gel time can indicate a reactivity of the curable compositions, e.g. at a specific temperature, and can be expressed as the number of seconds to gel point. Gel point refers to the point of incipient polymer network formation wherein the structure is substantially ramified such that essentially each unit of the network is connected to each other unit of the network. When a curable composition reaches the gel point remaining solvent becomes entrapped within the substantially ramified structure. When the trapped solvent reaches its boiling point bubbles can be formed in the structure, e.g. the prepreg, resulting in an undesirable product.

As discussed herein, for one or more embodiments, the curable compositions have a gel time of 200 seconds to 400 seconds at 171 °C. In some instances curable compositions having a gel time that is greater than 400 seconds at 171 °C can be modified by adding a catalyst and/or an additive, as discussed herein, to adjust the gel time to 200 seconds to 400 seconds at 171 °C, 200 seconds to 375 seconds at 171 °C, or 200 seconds to 350 seconds at 171 °C. For some applications, curable compositions having a gel time of less than 200 seconds at 171 °C can be considered too reactive.

Embodiments of the present disclosure provide prepregs. The prepreg can be obtained by a process that includes impregnating a matrix component into a reinforcement component. The matrix component surrounds and/or supports the reinforcement component. The disclosed curable compositions can be used for the matrix component. The matrix component and the reinforcement component of the prepreg provide a synergism. This synergism provides that the prepregs and/or products obtained by curing the prepregs have mechanical and/or physical properties that are unattainable with only the individual components.

The reinforcement component can be a fiber. Examples of fibers include, but are not limited to, glass, aramid, carbon, polyester, polyethylene, quartz, metal, ceramic, biomass, and combinations thereof. The fibers can be coated. An example of a fiber coating includes, but is not limited to, boron.

Examples of glass fibers include, but are not limited to, A-glass fibers, E-glass fibers, C-glass fibers, R-glass fibers, S-glass fibers, T-glass fibers, and combinations thereof. Aramids are organic polymers, examples of which include, but are not limited to, Kevlar®, Twaron®, and combinations thereof. Examples of carbon fibers include, but are not limited to, those fibers formed from polyacrylonitrile, pitch, rayon, cellulose, and combinations thereof. Examples of metal fibers include, but are not limited to, stainless steel, chromium, nickel, platinum, titanium, copper, aluminum, beryllium, tungsten, and combinations thereof. Examples of ceramic fibers include, but are not limited to, those fibers formed from aluminum oxide, silicon dioxide, zirconium dioxide, silicon nitride, silicon carbide, boron carbide, boron nitride, silicon boride, and combinations thereof. Examples of biomass fibers include, but are not limited to, those fibers formed from wood, non-wood, and combinations thereof.

The reinforcement component can be a fabric. The fabric can be formed from the fiber, as discussed herein. Examples of fabrics include, but are not limited to, stitched fabrics, woven fabrics, and combinations thereof. The fabric can be unidirectional, multiaxial, and combinations thereof. The reinforcement component can be a combination of the fiber and the fabric.

The prepreg is obtainable by impregnating the matrix component into the reinforcement component. Impregnating the matrix component into the reinforcement component may be accomplished by a variety of processes. The prepreg can be formed by contacting the reinforcement component and the matrix component via rolling, dipping, spraying, or some other procedure. After the prepreg reinforcement component has been contacted with the prepreg matrix component, the solvent can be removed via volatilization. While and/or after the solvent is volatilized the prepreg matrix component can be cured, e.g. partially cured. This volatilization of the solvent and/or the partial curing can be referred to as B-staging. The B-staged product can be referred to as the prepreg. For some applications, B-staging can occur via an exposure to a temperature of 60 °C to 250 °C; for example B-staging can occur via an exposure to a temperature from 65 °C to 240 °C , or 70 °C to 230 °C. For some applications, B-staging can occur for a period of time of 1 minute to 60 minutes; for example B-staging can occur for a period of time from, 2 minutes to 50 minutes, or 5 minutes to 40 minutes. However, for some applications the B-staging can occur at another temperature and/or another period of time.

One or more of the prepregs may be cured, e.g. more fully cured, to obtain a product. The prepregs can be layered or/and formed into a shape before being cured further. For some applications, e.g. when an electrical laminate is being produced, layers of the prepreg can be alternated with layers of a conductive material. An example of the conductive material includes, but is not limited to, copper foil. The prepreg layers can then be exposed to conditions so that the matrix component becomes more fully cured.

One example of a process for obtaining the more fully cured product is pressing. One or more prepregs may be placed into a press where it subjected to a curing force for a predetermined curing time interval to obtain the more fully cured product. The press may have a curing temperature of 80 °C to 250 °C; for example the press may have a curing temperature of 85 °C to 240 °C, or 90 °C to 230 °C. For one or more embodiments, the press has a curing temperature that is ramped from a lower curing temperature to a higher curing temperature over a ramp time interval.

During the pressing, the one or more prepregs can be subjected to a curing force via the press. The curing force may have a value that is 30 kPa to 350 kPa; for example the curing force may have a value that is 75 kPa to 300 kPa, or 100 kPa to 275 kPa. The predetermined curing time interval may have a value that is 5 seconds to 500 seconds; for example the predetermined curing time interval may have a value that is 25 seconds to 540 seconds, or 45 seconds to 520 seconds. For other processes for obtaining the product other curing temperatures, curing force values, and/or predetermined curing time intervals are possible. Additionally, the process may be repeated to further cure the prepreg and obtain the product.

The products obtained by curing the curable compositions, e.g. the products obtained by curing the prepreg(s), as discussed herein, can have a glass transition temperature of 150 °C to 250 °C; for example, the glass transition temperature can be from 160 °C to 230 °C, or 170 °C to 220 °C.

The product obtained by curing one or more of the curable compositions, as discussed herein, can have a thermal degradation temperature of 300 °C to 500 °C; for example, the thermal degradation temperature can be 310 °C to 475 °C, or 320 °C to 450 °C.

A product obtained by curing one or more of the curable compositions, as discussed herein, can have a relative permittivity of 2.7 to 3.1 at 1 gigahertz; for example, the relative permittivity at 1 gigahertz can be 2.8 to 3.05, or 2.9 to 3.0 when the curable composition includes the epoxy compound, the copolymer, as disclosed herein, the co-curing agent and/or the catalyst.

A product obtained by curing one or more of the disclosed curable compositions, as discussed herein, can have a dissipation factor of 0.006 to 0.013 at 1 gigahertz; for example, the dissipation factor at 1 gigahertz can be 0.007 to 0.01, or 0.008 to 0.009 when the curable composition includes the epoxy compound, the copolymer, as disclosed herein, the co-curing agent and/or the catalyst.

### EXAMPLES

In the Examples, various terms and designations for materials were used including, for example, the following:

Styrene (95% pure C₆H₅CH=CH₂), available from Sinopharm Chemical Co.

Maleic anhydride (97% purity), available from Sinopharm Chemical Co.

Dicyclopentadiene (cyclo-olefin), (95% purity), available from Sigma-Aldrich.

Norbomene (cyclo-olefin), (analytical grade) available from Sigma-Aldrich.

Azobisbutyronitrile (radical initiator), (chemically pure), available from Sinopharm Chemical Co.

Dodecyl mercaptan (chain transfer agent), (analytical grade), available from Sinopharm Chemical Co.

Cyclohexanone (solvent), (analytical grade), available from Sinopharm Chemical Co.

Methanol (analytical grade), available from Sinopharm Chemical Co.

2-methyl imidazole (catalyst), (analytical grade), available from Sinopharm Chemical Co.

Methyl ethyl ketone (solvent), (analytical reagent), available from Sinopharm Chemical Co.

Tetrahydrofuran, available from Sigma-Aldrich.

D.E.R™ 560 (aromatic epoxy compound), available from the Dow Chemical Company.

SMA® 3000P, (styrene -maleic anhydride copolymer), available from Sartomer Company, Inc.

SMA® 60 EF, (styrene -maleic anhydride copolymer), available from Sartomer Company, Inc.

### Example 1-Copolymer obtained by reacting styrene, maleic anhydride, and cyclo-olefin.

A styrene mole fraction of 0.64, a maleic anhydride mole fraction of 0.15, and a dicyclopentadiene mole fraction of 0.21 were reacted to obtain Example 1. A dicyclopentadiene-azobisisbutyronitrile solution was formed by dissolving 28.2 grams (g) of dicyclopentadiene and 2.4 g of azobisisbutyronitrile in 130 milliliters (ml) of cyclohexanone. The dicyclopentadiene-azobisisbutyronitrile solution was poured into a three-necked flask equipped with a refluxing condenser, a thermometer, a magnetic stirrer, and a nitrogen inlet. A nitrogen environment was provided by adding nitrogen to the flask over a five minute period. The contents of the flask were heated to 80 °C while being stirred. A maleic anhydride solution was formed by dissolving 14.7 g of maleic anhydride in 20 ml of cyclohexanone. A styrene-dodecyl mercaptan mixture was formed by mixing 66.3 g of styrene and 2.22 g of dodecyl mercaptan. A maleic anhydride-styrene-dodecyl mercaptan solution was formed by combining the maleic anhydride solution and the styrene-dodecyl mercaptan mixture. A reaction mixture that included Example 1, a copolymer obtained by reacting styrene, maleic anhydride, and a cyclo-olefin, was formed by dropwise adding the maleic anhydride-styrene-dodecyl mercaptan solution to the flask over a sixty minute period and thereafter maintaining the 80 °C temperature and stirring for 120 additional minutes. The reaction mixture was cooled to 20 °C and added dropwise into methanol, where the methanol was excessive such that the volume ratio of reaction mixture to methanol was about 1 to 10. Methanol was separated from Example 1 by filtering, then placing Example 1 in a fume hood for 8 hours, and then placing Example 1 into a vacuum oven at a temperature of 80 °C for 12 hours.

### Example 2-Copolymer obtained by reacting styrene, maleic anhydride, and cyclo-olefin.

A styrene mole fraction of 0.70, a maleic anhydride mole fraction of 0.15, and a dicyclopentadiene mole fraction of 0.15 were reacted to obtain Example 2. A dicyclopentadiene-maleic anhydride-azobisisbutyronitrile solution was formed by dissolving 19.8 g of dicyclopentadiene, 14.7 g of maleic anhydride, and 2.8 g of azobisisbutyronitrile in 150 ml of cyclohexanone. The dicyclopentadiene-maleic anhydride-azobisisbutyronitrile solution was poured into a three-necked flask equipped with a refluxing condenser, a thermometer, a magnetic stirrer, and a nitrogen inlet. A nitrogen environment was provided by adding nitrogen to the flask over a five minute period. The contents of the flask were heated to 80 °C while being stirred. A styrene-dodecyl mercaptan mixture was formed by mixing 72.8 g of styrene and 5.4 g of dodecyl mercaptan. A reaction mixture that included Example 2, a copolymer obtained by reacting styrene, maleic anhydride, and a cyclo-olefin, was formed by dropwise adding the styrene-dodecyl mercaptan mixture to the flask over a sixty minute period and thereafter maintaining the 80 °C temperature and stirring for 120 additional minutes. The reaction mixture was cooled to 20 °C and added dropwise into methanol, where the methanol was excessive such that the volume ratio of reaction mixture to methanol was about 1 to 10. Methanol was separated from Example 2 as described for Example 1.

### Example 3-Copolymer obtained by reacting styrene, maleic anhydride, and cyclo-olefin.

A styrene mole fraction of 0.70, a maleic anhydride mole fraction of 0.10, and a dicyclopentadiene mole fraction of 0.20 were reacted to obtain Example 3. Example 3, a copolymer obtained by reacting styrene, maleic anhydride, and a cyclo-olefin, was obtained and processed as described for Example 1, except that 26.4 g of dicyclopentadiene, 9.8 g of maleic anhydride, and 72.9 g of styrene were used for Example 3.

### Example 4-Copolymer obtained by reacting styrene, maleic anhydride, and cyclo-olefin.

A styrene mole fraction of 0.75, a maleic anhydride mole fraction of 0.12, and a dicyclopentadiene mole fraction of 0.13 were reacted to obtain Example 4. A dicyclopentadiene-maleic anhydride-azobisisbutyronitrile solution was formed by dissolving 13.6 g of dicyclopentadiene, 4.7 g of maleic anhydride, and 0.9 g of azobisisbutyronitrile in 130 ml of cyclohexanone. The dicyclopentadiene-maleic anhydride-azobisisbutyronitrile solution was poured into a three-necked flask equipped with a refluxing condenser, a thermometer, a magnetic stirrer, and a nitrogen inlet. A nitrogen environment was provided by adding nitrogen to the flask over a five minute period. The contents of the flask were heated to 80 °C while being stirred. A maleic anhydride-azobisisbutyronitrile solution was formed by dissolving 4.7 g of maleic anhydride, and 0.9 g of azobisisbutyronitrile in 20 ml of cyclohexanone. A styrene-dodecyl mercaptan mixture was formed by mixing 62.4 g of styrene and 4.3 g of dodecyl mercaptan. A styrene-dodecyl mercaptan-maleic anhydride-azobisisbutyronitrile mixture was formed by combining the maleic anhydride-azobisisbutyronitrile solution and the styrene-dodecyl mercaptan mixture. A reaction mixture that included Example 4, a copolymer obtained by reacting styrene, maleic anhydride, and a cyclo-olefin, was formed by dropwise adding the styrene-dodecyl mercaptan-maleic anhydride-azobisisbutyronitrile mixture to the flask over a sixty minute period and thereafter maintaining the 80 °C temperature and stirring for 120 additional minutes. The reaction mixture was cooled to 20 °C and added dropwise into methanol, where the methanol was excessive such that the volume ratio of reaction mixture to methanol was about 1 to 10. Methanol was separated from Example 4 as described for Example 1.

### Example 5-Copolymer obtained by reacting styrene, maleic anhydride, and cyclo-olefin.

A styrene mole fraction of 0.66, a maleic anhydride mole fraction of 0.17, and a norbornene mole fraction of 0.16 were reacted to obtain Example 5. A norbornene-azobisisbutyronitrile solution was formed by dissolving 9.4 g of norbornene and 1.6 g of azobisisbutyronitrile in 20 ml of cyclohexanone. The norbornene-azobisisbutyronitrile solution was poured into a three-necked flask equipped with a refluxing condenser, a thermometer, a magnetic stirrer, and a nitrogen inlet. A nitrogen environment was provided by adding nitrogen to the flask over a five minute period. The contents of the flask were heated to 80 °C while being stirred. A styrene-malic anhydride-dodecyl mercaptan solution was formed by dissolving 41.6 g of styrene, 9.8 g of maleic anhydride, and 1.8 g of dodecyl mercaptan in 30 ml of cyclohexanone. A reaction mixture that included Example 5, a copolymer obtained by reacting styrene, maleic anhydride, and a cyclo-olefin, was formed by dropwise adding the styrene-malic anhydride-dodecyl mercaptan solution to the contents of the flask over a thirty minute period and thereafter maintaining the 80 °C temperature and stirring for seven additional hours. The reaction mixture was cooled to 20 °C and added dropwise into methanol, where the methanol was excessive such that the volume ratio of reaction mixture to methanol was about 1 to 10. Methanol was separated from Example 5 as described for Example 1.

### Example 6-Copolymer obtained by reacting styrene, maleic anhydride, and cyclo-olefin.

A styrene mole fraction of 0.72, a maleic anhydride mole fraction of 0.14, and a norbornene mole fraction of 0.14 were reacted to obtain Example 6. The Example 6, a copolymer obtained by reacting styrene, maleic anhydride, and a cyclo-olefin, was obtained and processed as described for Example 5, except that 52.0 g of styrene and 3.6 g of dodecyl mercaptan were used for Example 6.

Weight average molecular weight (M_{w}), number average molecular weight (Mₙ), and polydispersity index (M_{w}/Mₙ) of Examples 1-6 were determined with an Agilent 1200 system having two PL-GEL Mixed D columns in series, an Agilent RID detector and Agilent chemstation GPC analysis software, the results of which are shown in Table 1. The calibration standard was Polymer Laboratories polystyrene EasiCal® vials (part no. 5064-8281). Portions of each of Examples 1-6 were dissolved in tetrahydrofuran to provide testing samples. The system was run at 35 °C, the eluent was tetrahydrofuran, the flow rate was 1.0 ml/minute, the testing sample concentration was about 5 milligrams (mg)/ml, and the injection volume was 20 microliters (µl).

**Table 1**

| | Weight average molecular weight | Number average molecular weight | Polydispersity index |
|---|---|---|---|
| Example 1 | 6711 | 4116 | 1.63 |
| Example 2 | 4869 | 2877 | 1.69 |
| Example 3 | 5193 | 2520 | 2.06 |
| Example 4 | 4686 | 2614 | 1.79 |
| Example 5 | 5227 | 2863 | 1.80 |
| Example 6 | 4790 | 2671 | 1.80 |

The data in Table 1 shows that Example 1-6 had a weight average molecular weight of 4,686 to 6,711, a number average molecular weight of 2,520 to 4,116, and a polydispersity index of 1.63 to 2.06.

The constitutional units derived from the styrene, constitutional units derived from the maleic anhydride, and constitutional units derived from the cyclo-olefin for Examples 1, 3, 4, 5, and 6 were determined using Fourier transform infrared spectroscopy (FTIR), the results of which are shown in Table 2. Calibration curve samples were prepared by separately dissolving maleic anhydride and styrene into respective tetrahydrofuran portions that had been dried via molecular sieve. Test samples were prepared by placing portions of each of Examples 1, 3, 4, 5, and 6 into a 100 °C vacuum oven for 120 minutes, cooling the portions in a desiccator, and dissolving each of the cooled portions into a respective tetrahydrofuran portion. A Nicolet™ 6700 with liquid cell was used for calibration curve setup and unknown maleic anhydride and styrene concentration testing. The 1780 cm⁻¹ peak of the FTIR spectra was assigned to vibration of maleic anhydride carbonyl and the 702 cm-1 peak of the FTIR spectra was assigned to vibration of styrene aromatic ring. The peak heights are proportional to maleic anhydride concentration and styrene concentration repetitively, and were used to establish the calibration curves. The calibration curves were used to determine the data shown in Table 2.

**Table 2**

| | Constitutional units derived from the maleic anhydride (wt %) | Constitutional units derived from the styrene (wt %) | Constitutional units derived from the cyclo-olefin and dodecyl mercaptan (wt%) |
|---|---|---|---|
| Example 1 | 19 | 66 | 15 |
| Example 3 | 12 | 66 | 22 |
| Example 4 | 12 | 67 | 21 |
| Example 5 | 24 | 59 | 17 |
| Example 6 | 19 | 69 | 12 |

The data in Table 2 shows that constitutional units derived from styrene were not greater than 80 weight percent of Examples 1, 3, 4, 5, and 6, constitutional units derived from maleic anhydride were not greater than 30 weight percent of Examples 1, 3, 4, 5, and 6, and constitutional units derived from the cyclo-olefin were not greater than 30 weight percent of Examples 1, 3, 4, 5, and 6.

### Examples 7-12-Curable compositions

Examples 7-12, curable compositions, were formed by separately dissolving a portion of each of Examples 1-6 in a respective portion of methyl ethyl ketone, then adding D.E.R.™ 560 to each of the respective portions, and then adding 2-methyl imidazole that had been dissolved in methanol to form a 10 wt% solution to each of the respective portions. Examples 7-12 had a non-volatile organic wt % of 60%.

Table 3A shows the compositions of Examples 7-12.

### Comparative Examples A-B

Comparative Examples A-B were formed as Examples 7-12, except that SMA® 3000P and SMA® 60 EF were used respectively for Comparative Examples A-B where Examples 1-6 were used for Examples 7-12. Table 3B shows the compositions of Comparative Examples A-B.

**Table 3A**

| EXAMPLE # | D.E.R™ 560 (aromatic epoxy compound) (g) | Copolymer (g) | 2-methyl imidazole (catalyst) (parts by weight per 100 parts by weight of the epoxy compound) | Methyl ethyl ketone (solvent) (g) |
|---|---|---|---|---|
| Example 7 | 10.0 | 13.4 (Example 1) | 0.50 | 15.6 |
| Example 8 | 20.0 | 28.6 (Example 2) | 0.10 | 32.4 |
| Example 9 | 10.0 | 19.1 (Example 3) | 1.00 | 19.4 |
| Example 10 | 10.0 | 16.0 (Example 4) | 1.00 | 17.3 |
| Example 11 | 18.4 | 18.4 (Example 5) | 0.30 | 22.3 |
| Example 12 | 10.0 | 19.1 (Example 6) | 0.30 | 19.7 |

**Table 3B**

| COMPARATIVE EXAMPLE # | D.E.R™ 560 (aromatic epoxy compound) (g)) | poly(styrene-co-maleic anhydride) (g) | 2-methyl imidazole (catalyst) (parts by weight per 100 parts by weight of the epoxy compound) | Methyl ethyl ketone (solvent) (g) |
|---|---|---|---|---|
| Comparative Example A | 19.1 | 15.0 (SMA® 3000P) | 0.30 | 22.7 |
| Comparative Example B | 91.9 | 132.0 (SMA® 60 EF) | 0.70 | 149.3 |

The gel times of Examples 7-12 and Comparative Examples A-B were determined via stroke cure on a 171 °C hot plate, the results of which are shown in Table 4A and Table 4B respectively.

**Table 4A**

| EXAMPLE # | Gel time at 171 °C (s) |
|---|---|
| Example 7 | 237 |
| Example 8 | 259 |
| Example 9 | 221 |
| Example 10 | 268 |
| Example 11 | 227 |
| Example 12 | 278 |

**Table 4B**

| COMPARATIVE EXAMPLE # | Gel time at 171 °C (s) |
|---|---|
| Comparative Example A | 265 |
| Comparative Example B | 236 |

The data in Table 4A shows that the curable compositions, Examples 7-12, have a gel time of 221 seconds to 278 seconds at a temperature of 171 °C. The gel times of Examples 7-12 are comparable to the gel times of Comparative Examples A-B, which have gel times of 265 s and 236 s respectively, as shown in Table 4B.

### Examples 13-18-Products obtained by curing Examples 7-12

Portions of each of Examples 7-12 was brushed onto respective E-glass fiber mats. The coated mats were then put into an oven at 171 °C for 180 seconds. Then each of the mats was twisted to obtain a respective powder. The respective powders were hot pressed at 195 °C for 60 minutes to provide cured products Examples 13-18, such that Examples 7-12 provided Examples 13-18 respectively.

### Comparative Examples C-D

Comparative Examples C-D were formed as Examples 13-18 except that Comparative Examples A-B were used respectively for Comparative Examples C-D where Examples 7-12 were used for Examples 13-18, respectively.

A RSA III dynamic mechanical thermal analyzer (TA Instruments) was used to determine glass transition temperatures for Examples 13-18 and Comparative Examples C-D, the results of which are shown in Table 5A and Table 5B respectively. The DMTA employed a frequency of 6.28 rad/s, an initial temperature of 20.0 °C, a final temperature of 350.0 °C, and a ramp rate of 3.0 °C/min.

Thermal stability analysis was used to determine degradation temperatures for Examples 13-16 and Comparative Examples C-D, the results of which are shown in Table 6A and 6B respectively. The thermal stability analysis employed a Q5000 machine available from TA Instruments that utilized a heating rate of 20.0 °C/min. Degradation temperature was determined as the temperature at 5 % weight loss of material occurred.

The relative permittivity of respective 0.3 millimeter thick samples of Examples 13-18 and Comparative Examples C-D was determined by ASTM D-150 employing an Agilent E4991 A RF impedance/material analyzer, the results of which are in Table 7A and Table 7B respectively.

The dissipation factor of respective 0.3 millimeter thick samples of Examples 13-18 and Comparative Examples C-D was determined by ASTM D-150 employing the Agilent analyzer, the results of which are in Table 8A and Table 8B respectively.

**Table 5A**

| Example # | Glass transition temperature (°C) |
|---|---|
| Example 13 | 213 |
| Example 14 | 205 |
| Example 15 | 161 |
| Example 16 | 184 |
| Example 17 | 198 |
| Example 18 | 176 |

**Table 5B**

| Comparative Example # | Glass transition temperature (°C) |
|---|---|
| Comparative Example C | 207 |
| Comparative Example D | 165 |

**Table 6A**

| Example # | Degradation temperature (°C) |
|---|---|
| Example 13 | 357 |
| Example 14 | 339 |
| Example 15 | 341 |
| Example 16 | 350 |

**Table 6B**

| Comparative Example # | Degradation temperature (°C) |
|---|---|
| Comparative Example C | 370 |
| Comparative Example D | 365 |

**Table 7A**

| Example # | Relative permittivity at 1 gigahertz |
|---|---|
| Example 13 | 3.02 |
| Example 14 | 3.01 |
| Example 15 | 2.94 |
| Example 16 | 2.85 |
| Example 17 | 2.89 |
| Example 18 | 2.92 |

**Table 7B**

| Comparative Example # | Relative permittivity at 1 gigahertz |
|---|---|
| Comparative Example C | 3.03 |
| Comparative Example D | 2.85 |

**Table 8A**

| Example # | Dissipation factor at 1 gigahertz |
|---|---|
| Example 13 | 0.008 |
| Example 14 | 0.009 |
| Example 15 | 0.007 |
| Example 16 | 0.007 |
| Example 17 | 0.01 |
| Example 18 | 0.01 |

**Table 8B**

| Comparative Example # | Dissipation factor at 1 gigahertz |
|---|---|
| Comparative Example C | 0.01 |
| Comparative Example D | 0.006 |

The data in Table 5A shows that Examples 13-18 had a glass transition temperature of 161 °C to 213 °C. The data in Table 5B shows that Comparative Examples C-D had glass transition temperatures of 207 °C and 165 °C respectively.

The data in Table 6A shows that Examples 13, 15, and 16, had a degradation temperature of 357 °C, 341 °C, and 350 °C respectively and Example 14 had a degradation temperature of 339 °C. The data in Table 6B shows that Comparative Examples C-D had degradations temperatures of 370 °C and 365 °C respectively.

The data in Table 7A shows that respective 0.3 millimeter thick samples of Examples 13-18 had a relative permittivity of 2.85 to 3.02 at 1 gigahertz. The data in Table 7B shows that Comparative Examples C-D had a relative permittivity of 3.03 and 2.85 at 1 gigahertz respectively.

The data in Table 8A shows that respective 0.3 millimeter thick samples of Examples 13-18 had a dissipation factor of 0.007 to 0.010 at 1 gigahertz. The data in Table 8B shows that Comparative Examples C-D had a dissipation factor of 0.006.and 0.01 at 1 gigahertz respectively.

## Claims

1. A curable composition comprising:
an epoxy compound;
a copolymer obtainable by reacting styrenic compound, maleic anhydride, and a cyclo-olefin, wherein the cyclo-olefin is selected from the group consisting of dicyclopentadiene, dicyclopentadiene derivatives, norbornene, norbornene derivatives, and combinations thereof; and
a solvent.

2. The curable composition of claim 1, wherein constitutional units derived from the styrenic compound are not greater than 80 weight percent of the copolymer, constitutional units derived from the maleic anhydride are not greater than 50 weight percent of the copolymer, and constitutional units derived from the cyclo-olefin are not greater than 45 weight percent of the copolymer, such that a combination of the constitutional units derived from the styrenic compound, the constitutional units derived from the maleic anhydride, and the constitutional units derived from the cyclo-olefin constitute 100 weight percent of the copolymer.

3. The curable composition of any one of the preceding claims, wherein the copolymer has a weight average molecular weight of 800 to 20,000 and a polydispersity index of 1.05 to 5.00.

4. The curable composition of any one of the preceding claims, wherein the copolymer is obtained by reacting a styrenic compound mole fraction of 0.01 to 0.90, a maleic anhydride mole fraction of 0.01 to 0.50, and a cyclo-olefin mole fraction of 0.01 to 0.50, such that the styrenic compound mole fraction, the maleic anhydride mole fraction, and the cyclo-olefin mole fraction equal 1.00.

5. The curable composition of any one of the preceding claims, wherein the epoxy compound is selected from the group consisting of aromatic epoxy compounds, alicyclic epoxy compounds, aliphatic epoxy compounds, and combinations thereof, and wherein the solvent is selected from the group consisting of C₃-C₈ ketones, C₁-C₆ amides, C₄-C₁₆ dialkyl ethers, C₆-C₁₂ aromatic hydrocarbons, C₁-C₃ chlorinated hydrocarbons, C₃-C₆ alkyl alkanoates, C₂-C₆ alkyl cyanides, and combinations thereof.

6. The curable composition of any one of the preceding claims, further comprising a co-curing agent selected from the group consisting of novolacs, amines, anhydrides, carboxylic acids, phenols, thiols, and combinations thereof.

7. The curable composition of claim 6, further comprising a catalyst.

8. The curable composition of claim 7, wherein the epoxy compound is 20 parts by weight to 80 parts by weight, a combination of the copolymer and the co-curing agent is 20 parts by weight to 80 parts by weight, the solvent is 2 parts by weight to 100 parts by weight, wherein the parts by weight are based on 100 parts by weight total of the epoxy compound, the copolymer, and the curing agent, and the catalyst is 0.01 parts by weight to 10 parts by weight per 100 parts by weight of the epoxy compound.

9. The curable composition of any one of the preceding claims, further comprising an additive selected from the group consisting of dyes, pigments, colorants, antioxidants, heat stabilizers, light stabilizers, plasticizers, lubricants, flow modifiers, drip retardants, flame retardants, antiblocking agents, mold release agents, toughening agents, low-profile additives, stress-relief additives, and combination thereof.

10. A product obtained by curing the curable composition as in any one of the preceding claims.

11. The product of claim 10, further comprising a reinforcement component.

## Patentansprüche

1. Härtbare Zusammensetzung, umfassend:
eine Epoxidverbindung;
ein Copolymer, das erhältlich ist durch Umsetzen einer Styrolverbindung, Maleinsäureanhydrids und eines Cyclo-Olefins, wobei das Cyclo-Olefin ausgewählt ist aus der Gruppe, bestehend aus Dicyclopentadien, Dicyclopentadien-Derivaten, Norbonen, Norbonen-Derivaten und Kombinationen davon, und
ein Lösemittel.

2. Härtbare Zusammensetzung nach Anspruch 1, wobei von der Styrolverbindung abgeleitete Struktureinheiten nicht mehr als 80 Gew.-% des Copolymers ausmachen, von dem Maleinsäureanhydrid abgeleitete Struktureinheiten nicht mehr als 50 Gew.-% des Copolymers ausmachen und von dem Cyclo-Olefin abgeleitete Struktureinheiten nicht mehr als 45 Gew.-% des Copolymers ausmachen, so dass eine Kombination der von der Styrolverbindung abgeleiteten Struktureinheiten, der von dem Maleinsäureanhydrid abgeleiteten Struktureinheiten und der von dem Cyclo-Olefin abgeleiteten Struktureinheiten 100 Gew.-% des Copolymers ergibt.

3. Härtbare Zusammensetzung nach einem der vorhergehenden Ansprüche, wobei das Copolymer ein gewichtsmittleres Molekulargewicht von 800 bis 20.000 und einen Polydispersitätsindex von 1,05 bis 5,00 besitzt.

4. Härtbare Zusammensetzung nach einem der vorhergehenden Ansprüche, wobei das Copolymer erhalten ist durch Umsetzen eines Molanteils der Styrolverbindung von 0,01 bis 0,90, eines Molanteils des Maleinsäureanhydrids von 0,01 bis 0,50 und eines Molanteils des Cyclo-Olefins von 0,01 bis 0,50, so dass der Molanteil der Styrolverbindung, der Molanteil des Maleinsäureanhydrids und der Molanteil des Cyclo-Olefins gleich 1,00 sind.

5. Härtbare Zusammensetzung nach einem der vorhergehenden Ansprüche, wobei die Epoxidverbindung ausgewählt ist aus der Gruppe, bestehend aus aromatischen Epoxidverbindungen, alicyclischen Epoxidverbindungen, aliphatischen Epoxidverbindungen und Kombinationen davon, und wobei das Lösemittel ausgewählt ist aus der Gruppe, bestehend aus C₃-C₈-Ketonen, C₁-C₆-Amiden, C₄-C₁₆-Dialkylethern, aromatischen C₆-C₁₂-Kohlenwasserstoffen, chlorierten C₁-C₃-Kohlenwasserstoffen, C₃-C₆-Alkylalkanoat, C₂-C₆-Alkylcyaniden und Kombinationen davon.

6. Härtbare Zusammensetzung nach einem der vorhergehenden Ansprüche, ferner umfassend ein Co-Härtungsmittel, das ausgewählt ist aus der Gruppe, bestehend aus Novolaken, Aminen, Anhydriden, Carbonsäuren, Phenolen, Thiolen und Kombinationen davon.

7. Härtbare Zusammensetzung nach Anspruch 6, ferner umfassend einen Katalysator.

8. Härtbare Zusammensetzung nach Anspruch 7, wobei die Epoxidverbindung 20 bis 80 Gewichtsteile ausmacht, eine Kombination des Copolymers und des Co-Härtungsmittels 20 bis 80 Gewichtsteile ausmacht, das Lösemittel 2 bis 100 Gewichtsteile ausmacht, wobei die Gewichtsteile auf 100 Gewichtsteile des Gesamtgewichts der Epoxidverbindung, des Copolymers und des Härtungsmittels bezogen sind, und der Katalysator 0,01 bis 10 Gewichtsteile pro 100 Gewichtsteile der Epoxidverbindung ausmacht.

9. Härtbare Zusammensetzung nach einem der vorhergehenden Ansprüche, ferner aufweisend ein Additiv, das ausgewählt ist aus der Gruppe, bestehend aus Farbstoffen, Pigmenten, Farbmitteln, Antioxidantien, Wärmestabilisatoren, Lichtstabilisatoren, Weichmachern, Schmierstoffen, Fließveränderungsmitteln, Tropfhemmern, Flammschutzmitteln, Antiblockmitteln, Formtrennmitteln, Zähmachern, Low-Profile-Additiven, Spannungsentlastungs-Additiven und Kombinationen davon.

10. Durch Härten der härtbaren Zusammensetzung nach einem der vorstehenden Ansprüche erhaltenes Produkt.

11. Produkt nach Anspruch 10, ferner umfassend einen Verstärkungsbestandteil.

## Revendications

1. Composition durcissable, comprenant :
un composé d'époxy ;
un copolymère pouvant être obtenu par la réaction d'un composé styrénique, de l'anhydride maléique et d'une cyclooléfine, dans lequel la cyclooléfine est sélectionnée dans le groupe consistant en le dicyclopentadiène, les dérivés de dicyclopentadiène, le norbornène, les dérivés de norbornène et leurs combinaisons ; et
un solvant.

2. Composition durcissable selon la revendication 1, dans laquelle les motifs constitutionnels dérivés du composé styrénique ne représentent pas plus de 80 pour cent en poids du copolymère, les motifs constitutionnels dérivés de l'anhydride maléique ne représentent pas plus de 50 pour cent en poids du copolymère et les motifs constitutionnels dérivés de la cyclooléfine ne représentent pas plus de 45 pour cent en poids du copolymère, de telle sorte qu'une combinaison des motifs constitutionnels dérivés du composé styrénique, des motifs constitutionnels dérivés de l'anhydride maléique et des motifs constitutionnels dérivés de la cyclooléfine constitue 100 pour cent en poids du copolymère.

3. Composition durcissable selon l'une quelconque des revendications précédentes, dans laquelle le copolymère présente un poids moléculaire moyen en poids de 800 à 20 000 et un indice de polydispersité de 1,05 à 5,00.

4. Composition durcissable selon l'une quelconque des revendications précédentes, dans laquelle le copolymère est obtenu par la réaction d'une fraction molaire du composé styrénique de 0,01 à 0,90, d'une fraction molaire de l'anhydride maléique de 0,01 à 0,50 et d'une fraction molaire de la cyclooléfine de 0,01 à 0,50, de telle sorte que la fraction molaire du composé styrénique, la fraction molaire de l'anhydride maléique et la fraction molaire de la cyclooléfine soit égale à 1,00.

5. Composition durcissable selon l'une quelconque des revendications précédentes, dans laquelle le composé d'époxy est sélectionné dans le groupe consistant en les composés d'époxy aromatique, les composés d'époxy alicyclique, les composés d'époxy aliphatique et leurs combinaisons, et dans laquelle le solvant est sélectionné dans le groupe consistant en les cétones en C₃-C₈, les amides en C₁-C₆, les dialkyléthers en C₄-C₁₆, les hydrocarbures aromatiques en C₆-C₁₂, les hydrocarbures chlorés en C₁-C₃, les alcanoates d'alkyle en C₃-C₆, les cyanures d'alkyle en C₂-C₆ et leurs combinaisons.

6. Composition durcissable selon l'une quelconque des revendications précédentes, comprenant en outre un agent de co-durcissement sélectionné dans le groupe consistant en les novolaques, les amines, les anhydrides, les acides carboxyliques, les phénols, les thiols et leurs combinaisons.

7. Composition durcissable selon la revendication 6, comprenant en outre un catalyseur.

8. Composition durcissable selon la revendication 7, dans laquelle le composé d'époxy représente 20 parties en poids à 80 parties en poids, une combinaison du copolymère et de l'agent de co-durcissement représente 20 parties en poids à 80 parties en poids, le solvant représente 2 parties en poids à 100 parties en poids, dans laquelle les parties en poids sont basées sur 100 parties en poids au total du composé d'époxy, du copolymère et de l'agent de durcissement, et le catalyseur représente 0,01 partie en poids à 10 parties en poids pour 100 parties en poids du composé d'époxy.

9. Composition durcissable selon l'une quelconque des revendications précédentes, comprenant en outre un additif sélectionné dans le groupe consistant en les teintures, les pigments, les colorants, les anti-oxydants, les thermostabilisants, les photostabilisants, les plastifiants, les lubrifiants, les modificateurs d'écoulement, les retardateurs d'égouttage, les ignifuges, les agences antiblocage, les agents de démoulage, les agents de renforcement, les additifs à faible retrait, les additifs de réduction des tensions et leurs combinaisons.

10. Produit obtenu par le durcissement de la composition durcissable selon l'une quelconque des revendications précédentes.

11. Produit selon la revendication 10, comprenant en outre un composant de renforcement.
